# FASCICULE DE BREVET EUROPEEN

(11) **EP 1 941 013 B1**
(45) Date de publication et mention de la délivrance du brevet: **04.06.2014**
(21) Numéro de dépôt: 06808163.7
(22) Date de dépôt: 19.09.2006
(51) Int. Cl.: C11C 3/04, C10L 1/02

(54) **PROCEDE PERFECTIONNE DE FABRICATION D'ESTERS ETHYLIQUES A PARTIR DE CORPS GRAS D ORIGINE NATURELLE**
VERBESSERTES VERFAHREN ZUR HERSTELLUNG VON ETHYLESTERN AUS NATÜRLICHEN FETTEN
IMPROVED METHOD FOR MAKING ETHYL ESTERS FROM NATURAL FATS

(30) Priorité: 21.09.2005 FR 0509733
(43) Date de publication de la demande: 09.07.2008
(73) Titulaire: Institut Français du Pétrole, 92852 Rueil Malmaison Cedex (FR)
(72) Inventeur: HILLION, Gérard, F-95220 Herblay (FR); DELFORT, Bruno, F-75005 Paris (FR)
(86) Numéro de dépôt international: PCT/FR2006/002141
(87) Numéro de publication internationale: WO 2007/034067

(56) Documents cités:
- DE-A1- 4 238 195
- US-A- 5 354 878
- US-A- 5 434 279
- US-A- 5 514 820
- US-A1- 2003 004 363

## Description

La présente invention concerne la fabrication d'esters éthyliques d'acides gras utilisables comme substituts du gazole, à partir d'huiles ou de graisses naturelles, végétales ou animales, ou d'autres mélanges de glycérides.

Elle a plus particulièrement pour objet un procédé amélioré de transestérification permettant, à partir d'huiles ou de graisses naturelles, végétales ou animales, ou d'autres mélanges de glycérides, l'obtention quasi-quantitative d'esters éthyliques d'acides gras.

La réaction de transestérification par le méthanol et l'éthanol est bien connue de l'homme du métier. Elle utilise le plus souvent des catalyseurs homogènes, par exemple des catalyseurs acides (acides sulfoniques, acide sulfurique etc.), comme décrit notamment dans le brevet US-A-4 695 411, des composés métalliques divers, par exemple des sels métalliques comme des sels de titane, de zinc, de magnésium, d'étain, d'antimoine ou de plomb, ces composés métalliques pouvant être sous la forme d'alcoolates, de dérivés alkyles ou d'oxydes. De préférence, on utilise plus particulièrement, de par leur grande réactivité, des catalyseurs basiques homogènes du type NaOH, KOH ou LiOH en solution dans le méthanol, ou directement des alcoolates de ces mêmes métaux, ou encore certains carbonates comme par exemple le carbonate de potassium et le carbonate de sodium, comme cités par Freedman B. et al : JAOCS 61 n°10, p.1638 ; par Pryde E.H., "Vegetable Oil Fuels", Proc. Int. Conf., Fargo, ND, 1982, pp. 117-122 ; et dans le brevet US-A-2 383 602.

La transestérification en présence de méthanol est généralement réalisée en une seule étape de catalyse dans le cas d'une réaction conduite en batch ou au minimum en deux étapes de catalyse lorsque l'on opère en continu par l'intermédiaire de réacteurs à débordement comme décrit dans le brevet US 5 354 878.

Le document DE 42 38 195 décrit un procédé de production d'esters méthyliques de colza comprenant deux étapes de transestérification successives, suivies chacune d'étapes de séparation de la glycérine. Ces étapes de séparation de la glycérine sont réalisées en deux temps, puisque entre deux étapes, la température et le temps de décantation sont augmentés. Une addition d'acide citrique permet ensuite de neutraliser le catalyseur et l'excès de méthanol est éliminé par distillation.

Les procédés d'éthanolyse décrits sont peu nombreux et beaucoup moins performants que ceux qui utilisent le méthanol. En effet, avec l'éthanol et en utilisant un même ratio molaire alcool/huile qu'avec le méthanol, il est impossible d'obtenir naturellement une séparation du glycérol formé (voir notamment le brevet US-A-2 383 602).

Le pouvoir solvant de l'éthanol étant bien supérieur à celui du méthanol, ceci a pour conséquence de rendre soluble la glycérine formée pendant la réaction. La conversion en esters s'en trouve pénalisée, ce qui empêche d'obtenir en une seule étape de réaction une conversion élevée.

Une seconde étape de transestérification est donc nécessaire après qu'on a éliminé du milieu réactionnel la glycérine formée.

La distillation partielle d'éthanol ou l'ajout d'une certaine quantité d'eau ou d'un tiers solvant tel qu'un hydrocarbure, par exemple du n-heptane, permet de diminuer la solubilité de la glycérine et d'en éliminer une quantité suffisante, ce qui permet d'atteindre en deuxième étape de catalyse une conversion élevée. Une autre alternative permettant d'atteindre des conversions élevées consiste à distiller dans certaines conditions et sous pression réduite les esters éthyliques fabriqués au cours de la première étape de transestérification.

On a maintenant découvert, de manière inattendue, que l'on pouvait réaliser l'éthanolyse d'une huile, d'une graisse, ou de tout autre mélange de glycérides, en deux étapes de catalyse en utilisant un catalyseur basique soluble, tout en obtenant une décantation naturelle de la glycérine après la première étape de transestérification, sans avoir recours à une distillation de l'excès d'alcool ou à un ajout d'eau ou d'un tiers solvant.

Ainsi, l'invention propose un procédé de fabrication d'esters éthyliques d'acides gras à partir d'huiles ou de graisses végétales ou animales ou d'autres mélanges de glycérides, dans lequel les étapes de transestérification s'effectuent en mode batch (discontinu) et qui comprend la succession d'étapes suivantes :
- une étape (a) dans laquelle on transestérifie l'huile, la graisse, ou le mélange de glycérides dont l'indice d'acide est au plus de 2 par de l'éthanol dont la teneur en eau est comprise entre 3000 et 5000 ppm, dans un rapport stoechiométrique éthanol/huile compris entre 1,3 et 2 en utilisant un catalyseur soluble, ou le devenant au cours de la réaction ;
- une étape (b) de décantation et d'élimination de la glycérine formée sans avoir recours à une opération d'évaporation de l'excès d'éthanol ;
- une étape (c) dans laquelle on réalise une deuxième réaction de transestérification de façon à obtenir un produit dont la teneur en esters est d'au moins 97 % en masse ;
- une étape (d) dans laquelle on réalise une neutralisation contrôlée du catalyseur en introduisant une quantité d'acide telle que l'on neutralise uniquement le catalyseur actif;
- une étape (e) dans laquelle on élimine par distillation l'excès d'éthanol ;
- une étape (f) dans laquelle l'ester subit une purification par des séquences de lavage à l'eau ;
- une étape (g) dans laquelle le mélange d'ester est séché sous pression réduite.

Dans le procédé de l'invention, en répartissant judicieusement la stoechiométrie en éthanol sur les deux étapes (a) et (c) de transestérification et en utilisant comme catalyseur soit un alcoolate alcalin obtenu par dissolution dans un alcool (méthanol ou éthanol) d'un hydroxyde de sodium, de potassium ou de lithium, soit une solution méthanolique de méthylate de sodium disponible commercialement, on obtient aisément à l'issue de la première étape de catalyse [étape (a)] une conversion en esters fabriqués supérieure ou égale à 90 %. Il est alors possible, après élimination de la glycérine formée, d'effectuer la seconde étape de catalyse [étape (c)] après l'ajout d'un appoint d'éthanol et de catalyseur. La conversion en esters éthyliques ainsi obtenue est alors suffisante pour atteindre la qualité demandée à un mélange d'esters à usage carburant.

L'utilisation comme catalyseur, dans les étapes (a) et (c), d'un alcoolate de métal alcalin, par exemple de l'éthylate ou du méthylate de sodium ou de potassium, offre l'avantage d'obtenir de l'éthanol pratiquement anhydre en fin de deuxième étape de catalyse. L'alcoolate joue en effet le rôle d'un desséchant, comme le montre l'équation chimique d'hydrolyse de l'alcoolate par l'eau (l'eau provenant essentiellement des charges : huile et éthanol). Cette réaction est stoechiométrique et, dans le cas du méthylate, elle s'écrit comme suit :

MOCH₃ + H₂O → CH₃OH + MOH

(où M représente le métal alcalin). Ceci est un moyen élégant d'éliminer physiquement l'eau du milieu réactionnel.

Par ailleurs, après la seconde étape de catalyse [étape (c)], l'étape (d) de neutralisation contrôlée du catalyseur actif, c'est-à-dire affectant uniquement les alcoolates (méthylate, éthylate et/ou glycérate) de sodium, permet d'effectuer l'élimination quasi-totale de l'excès d'éthanol présent dans le milieu sans risque de rétro-réaction, qui consiste en la réaction du glycérol présent avec les esters éthyliques pour reformer des glycérides (de type mono-, di- et triglycérides)

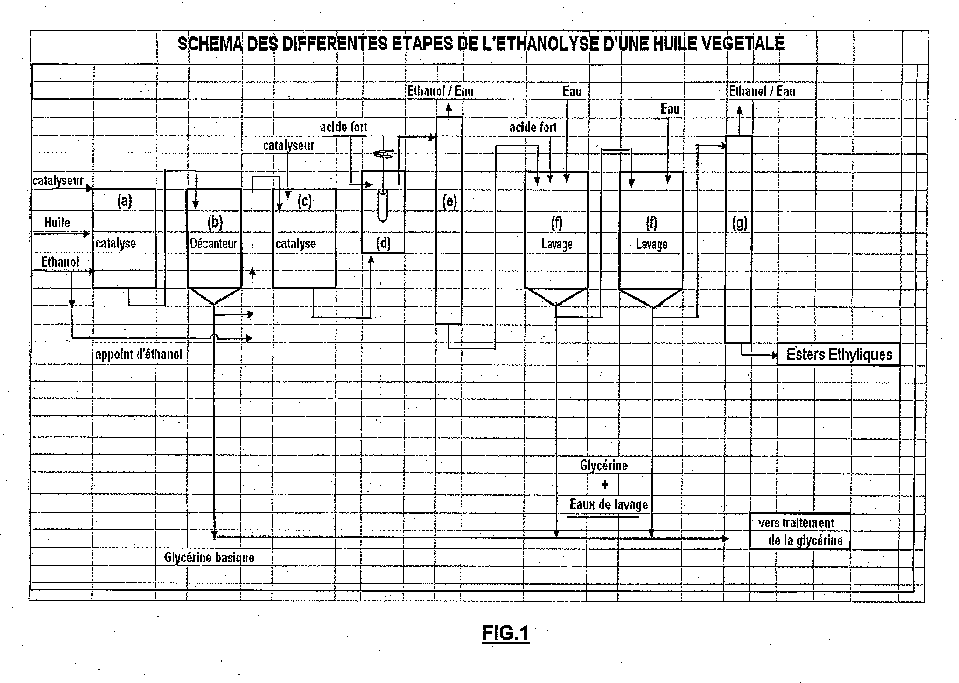

Les différentes étapes du procédé de l'invention sont décrites plus en détail ci-après, en liaison avec la figure annexée.

### Étape (a)

L'huile, la graisse, végétale ou animale, ou le mélange de glycérides de départ présente un indice d'acide d'au plus 2. On utilise de l'éthanol dont la teneur en eau est comprise entre 3000 et 5000 ppm, en utilisant une stoechiométrie éthanol/huile telle qu'on obtient une conversion en esters fabriqués supérieure ou égale à 90 %. Cette stoechiométrie éthanol/huile est comprise entre 1,3 et 2, de préférence entre 1,6 et 1,8.

L'intérêt de cette étape dans le procédé de l'invention est que sa mise en oeuvre permet, dans l'étape suivante (b), une décantation naturelle de la glycérine, sans qu'on ait recours à une opération d'évaporation de l'excès d'éthanol.

Le catalyseur utilisé est un catalyseur basique homogène, c'est-à-dire un catalyseur soluble, ou qui le devient au cours de la réaction. Il peut être obtenu par exemple par dissolution d'une base forte dans un alcool (méthanol ou éthanol), ou encore à partir d'un alcoolate de métal alcalin, qui peut être par exemple un éthylate ou un méthylate de sodium, ou à partir d'un composé métallique de type alcoolate, alkyle et/ou oxyde. Le méthylate de sodium est préféré car il présente l'avantage d'être un produit bon marché, disponible industriellement en solution à 30 % dans le méthanol.

La température de réaction est généralement comprise entre 20 et 100°C, de préférence entre 40 et 80°C.

En mode batch, le temps de réaction qui permet d'atteindre l'équilibre thermodynamique est généralement compris entre 40 et 160 minutes.

On notera que si l'on utilise comme catalyseur un méthylate de métal alcalin en solution dans le méthanol, le mélange d'esters obtenus contiendra une certaine proportion d'esters méthyliques, en général entre 10 et 15 % en masse.

### Étape (b)

La décantation naturelle de la glycérine est obtenue dès l'arrêt de l'agitation et à une température du milieu comprise par exemple entre 40 et 60°C. La glycérine contenue dans la phase inférieure est ensuite éliminée par soutirage.

### Étape (c)

Cette deuxième étape de transestérification est réalisée après ajout d'une nouvelle quantité de catalyseur alcalin et d'une quantité d'éthanol correspondant à une stoechiométrie éthanol/huile de départ comprise en général entre 0,3 et 1, de préférence entre 0,5 et 0,7.

La température de catalyse est du même ordre de grandeur que celle de l'étape (a), avec un temps de catalyse compris entre 20 et 45 minutes.

Par cette étape (c), on obtient un produit dont la teneur en esters est d'au moins 97 % en masse.

### Étape (d)

La neutralisation sélective de la part du catalyseur correspondant aux alcoolates de sodium est effectuée à l'aide d'un acide minéral fort.

On peut utiliser par exemple des solutions aqueuses d'acide chlorhydrique, sulfurique ou phosphorique. Si, après neutralisation, il est intéressant de récupérer un éthanol sec, on peut aussi utiliser un acide exempt d'eau, par exemple de l'acide chlorhydrique gazeux.

A ce stade du procédé, le catalyseur contenu dans le milieu réactionnel est composé d'un mélange d'alcoolates et de savons de sodium. Un dosage potentiométrique par exemple par HCl 0,1N permet de déterminer la concentration de chacun des sels de sodium (alcoolates et savons) présents dans le mélange d'esters. La neutralisation sélective de la basicité forte (celle des alcoolates) vis-à-vis des savons permet d'éviter la libération d'acides gras dans le mélange d'esters, cette acidité grasse risquant d'élever l'indice d'acide du mélange à une valeur supérieure à 0,5, mettant hors spécification le mélange d'esters obtenu.

L'excès d'éthanol présent dans le milieu réactionnel après la seconde étape de catalyse [étape (c)] est pratiquement anhydre. Il est possible de conserver cette qualité de l'éthanol après la neutralisation en utilisant un acide fort exempt d'eau, comme par exemple de l'acide chlorhydrique gazeux.

### Étape (e)

Dans cette étape, l'excès d'éthanol est éliminé du milieu réactionnel en général par distillation.

L'excès d'éthanol éliminé est pratiquement anhydre si; dans l'étape (d), la neutralisation a été effectuée par un acide fort exempt d'eau, comme par exemple de l'acide chlorhydrique gazeux. L'éthanol peut alors être recyclé sans qu'on ait recours à une étape de rectification.

Par contre, si on a utilisé pour la neutralisation de l'étape (d) une solution aqueuse d'un acide minéral (ainsi par exemple les solutions aqueuses d'acide chlorhydrique contiennent au mieux 65 à 70 % d'eau), l'éthanol pourra contenir une quantité d'eau variable, selon le taux de dilution de la solution d'acide utilisée. Dans ce cas, l'éthanol devra être rectifié, puis séché par des techniques adaptées et connues, comme la distillation azéotropique, le passage sur tamis moléculaires et/ou la pervaporation sur membranes.

La neutralisation sélective du catalyseur actif menée dans l'étape (d) permet de s'affranchir de la rétro-réaction, quelles que soient les conditions de la distillation, ce qui permet de pousser l'évaporation de l'excès d'éthanol jusqu'à une élimination quasi-totale de celui-ci dans le mélange d'esters.

### Étape (f)

Dans cette étape, on purifie la phase esters en la débarrassant du catalyseur résiduel et de la glycérine soluble par une succession de lavages à l'eau.

Si nécessaire, on peut effectuer un premier lavage neutralisant qui élimine efficacement les traces de savons de sodium contenus dans la phase esters en utilisant un acide minéral fort, comme l'acide sulfurique, l'acide chlorhydrique ou l'acide phosphorique, puis on effectue un ou plusieurs lavage(s) à l'eau pure, selon l'efficacité d'élimination de l'excès d'acide fort.

### Étape (g)

On élimine les traces d'eau et d'éthanol par un séchage (évaporation sous pression réduite), de façon que le mélange d'esters réponde aux spécifications d'un Biodiesel concernant les deux critères (teneurs en eau et en éthanol) de la norme EN 14214.

Nota : Rappel des spécifications tirées de la Norme EN 14214
- Triglycérides = < 0,2
- Diglycérides = < 0,20
- Monoglycérides = < 0,80
- Esters d'acides gras = 96,50 mini

Les exemples suivants illustrent le procédé de l'invention.

### Exemple 1 (comparatif)

### Réaction d'éthanolyse

Dans un réacteur à double enveloppe en verre agité et équipé d'une vanne de fond et chauffé à 70°C, on introduit 500 g d'huile de colza raffinée de qualité alimentaire et 180 g d'éthanol, contenant au maximum 1000 ppm d'eau, ce qui correspond à une stoechiométrie alcool/huile de 2,3. On introduit 8 g d'une solution méthanolique à 30 % de méthylate de sodium dès que l'on atteint la température de 70°C. On maintient l'agitation et la température à 70°C ± 2°C pendant 60 minutes.

Des prélèvements sont réalisés après 20, 30, 45 et 60 minutes. Sur chaque prélèvement, le catalyseur actif est détruit immédiatement par action d'une solution aqueuse d'acide sulfurique à 10%, ce qui fige la conversion. La phase esters surnageante est alors analysée.

La chromatographie liquide par perméation de gel permet de déterminer la composition du mélange d'esters et de glycérides partiels.

Il n'y a plus d'évolution de la conversion entre 45 et 60 minutes de temps de catalyse ce qui signifie que l'on a atteint, après 45 minutes de temps de séjour, l'équilibre thermodynamique de la réaction de transestérification.

La composition, exprimée en % masse, est la suivante:
- Triglycérides = 0,03
- Diglycérides = 0,4
- Stérols et dérivés = 1,6
- Monoglycérides = 3,02
- Esters d'acides gras = 94,95

### Exemple 2 (comparatif)

### Réaction de méthanolyse

Dans un réacteur en verre à double enveloppe, agité et équipé d'une vanne de fond on introduit 500 g d'huile de colza raffinée de qualité alimentaire et 125 g de méthanol, contenant au maximum 1000 ppm d'eau, ce qui correspond à une stoechiométrie alcool/huile de 2,3. On introduit 8 g d'une solution méthanolique à 30 % de méthylate de sodium dès que l'on atteint la température de 70°C. On maintient l'agitation et la température à 70°C ± 2°C pendant 60 minutes.

Des prélèvements sont réalisés après 20, 30, 45 et 60 minutes. Sur chaque prélèvement le catalyseur actif est détruit immédiatement par action d'une solution aqueuse d'acide sulfurique à 10%, ce qui fige la conversion. La phase esters surnageante est alors analysée.

La chromatographie liquide par perméation de gel permet de déterminer la composition du mélange d'esters et de glycérides partiels.

IL n'y a plus d'évolution de la conversion entre 45 et 60 minutes de temps de catalyse ce qui signifie que l'on a atteint, après 45 minutes de temps de séjour, l'équilibre thermodynamique de la réaction de transestérification.

La composition, exprimée en % masse, est la suivante:
- Triglycérides = 0,05
- Diglycérides = 0,10
- Stérols et dérivés = 1,6
- Monoglycérides = 0,75
- Esters d'acides gras = 97,50

### Exemple 3 selon l'invention

Dans un réacteur en verre agité et équipé d'une vanne de fond et chauffé à 70°C, on introduit 1000 g d'huile de colza raffinée de qualité alimentaire et 266 g d'éthanol, contenant 3000 ppm d'eau, en respectant une stoechiométrie alcool/huile de 1,7. Puis on introduit 10 g d'une solution méthanolique à 30 % de méthylate de sodium. On maintient l'agitation et la température de 70°C ± 2°C pendant 60 minutes (ceci constitue l'étape (a)).

Dans l'étape (b), on décante le milieu réactionnel à une température voisine de 60°C. Après 15 à 20 minutes de décantation, on soutire 95 g d'une solution glycérineuse composée de glycérine, d'éthanol, d'esters éthyliques, de savons de sodium et d'alcoolates (mélange de méthylate, d'éthylate, et de glycérate) de sodium.

A l'issue de cette première réaction de transestérification, la composition du mélange d'esters est la suivante (en % masse) :
- esters éthyliques et méthyliques : 91,5
- triglycérides : 0,9
- diglycérides : 2,6
- Monoglycérides: 3,7
- stérols et esters de stérols : 1,3.

Dans l'étape (c), on réalise une deuxième étape de transestérification. Pour ce faire, on ajoute à la phase esters 93 g d'éthanol contenant environ 3000 ppm d'eau, ce qui correspond à une stoechiométrie éthanol/huile de départ de 0,6, et 3,33 g de méthylate de sodium en solution à 30 % dans le méthanol. On maintient en milieu agité à 60°C pendant au moins 30 minutes.

Dans ces conditions de température, la glycérine formée reste soluble dans le milieu réactionnel.

A l'issue de cette deuxième réaction de transestérification, la composition du mélange est la suivante (en % masse) :
- esters éthyliques et méthyliques : 97,5
- triglycérides : < 0,1
- diglycérides : 0,2
- monoglycérides : 0,7
- stérols et esters de stérols : 1,6.

Dans l'étape (d) on neutralise essentiellement les alcoolates de sodium (catalyseur actif) présents dans le milieu. Un dosage potentiométrique détermine la teneur en alcoolates dans le milieu. On ajoute 4,62 g d'une solution d'acide chlorhydrique à 30 % (soit 0,038 moles d'équivalent H⁺). La valeur du pH obtenu est de 6,2. Cette quantité d'acide chlorhydrique correspond à un excès de 5 % par rapport à la stoechiométrie, ce qui permet d'assurer une neutralisation totale des alcoolates tout en minimisant la libération des acides gras résultant de la neutralisation des savons.

Dans l'étape (e), on élimine l'excès d'éthanol dans un appareillage à distiller adapté. La température en fond de ballon est de 140°C et la pression en fin de distillation est de 160 mm de Hg.

Dans ces conditions, aucune rétro-réaction n'a été constatée. La teneur résiduelle en éthanol est de 0,086 % pour une teneur initiale en éthanol de l'ordre de 17 % dans le mélange d'esters.

La teneur en eau de l'éthanol obtenu est de l'ordre de 2 % en poids.

Dans l'étape (f), on purifie la phase d'esters éthyliques obtenue en effectuant une série de lavage à l'eau.

Dans le réacteur équipé d'une vanne de fond, on introduit la totalité du mélange réactionnel et on amène sa température à 60°C. On ajoute 30 g d'eau désionisée, on agite 5 minutes et on décante 15 à 20 minutes. On soutire une phase aqueuse enrichie en alcool, glycérine et sels de sodium. On répète l'opération jusqu'à obtention d'une valeur de pH de la solution aqueuse comprise entre 7 et 8.

Le mélange d'esters obtenu respecte la norme EN 14214 relative à un Biodiesel et sa composition est la suivante (en % masse) :
- esters éthyliques et méthyliques : 97,6
- triglycérides : < 0,1
- diglycérides : 0,2
- Monoglycérides 0,6
- stérols et esters de stérols 1,6
- I.A. (Indice d'Acide) = 0,23.

Après l'étape (g) de séchage, on recueille 1028 g d'un mélange d'esters éthyliques et méthyliques qui contient 10,3 % d'esters méthyliques. La présence d'esters méthyliques provient de l'utilisation comme catalyseur de méthylate de sodium et la totalité du méthanol mise en jeu est transformée en esters méthyliques.

### Exemple 4

On reproduit à l'identique l'Exemple 3. Seules les conditions opératoires de l'étape (e), qui consiste à éliminer la plus grande partie de l'excès d'éthanol, sont modifiées.

Les conditions opératoires sont une température en fond de ballon de 160°C et une pression en fin de distillation de 160 mm de Hg.

Dans ces conditions, aucune rétro-réaction n'a été mesurée. La teneur résiduelle en éthanol dans le mélange d'esters est inférieure à 0,01 %. La teneur en eau de l'éthanol distillé est de l'ordre de 2 % poids et la composition du mélange d'esters est la suivante (en % masse) :
- esters éthyliques et méthyliques : 97,5
- triglycérides : < 0,1 1
- diglycérides : 0,2
- monoglycérides : 0,7
- stérols et esters de stérols : 1,6
- I.A. (Indice d'Acide) = 0,25.

### Exemple 5 (comparatif)

On reproduit à l'identique l'Exemple 3 jusqu'à l'étape (c) incluse.

Dans l'étape (d) de neutralisation du mélange d'esters, on introduit une quantité d'acide chlorhydrique (solution à 30 %) telle que l'on atteint une valeur de pH voisine de 2.

Les étapes de purification de (e) à (g) sont identiques à celles décrites dans l'Exemple 3.

Dans ces conditions, les savons de sodium présents libèrent des acides gras que l'on retrouve dans le mélange d'esters, dont la composition est la suivante (en % masse) :
- esters éthyliques et méthyliques : 97,6
- triglycérides : < 0,1
- diglycérides : 0,2
- monoglycérides : 0,6
- stérols et esters de stérols : 1,6
- I.A. (indice d'Acide) = 1,18.

L'indice d'acide du mélange est supérieur à 0,5 et ne respecte pas la spécification de 0,5 demandée à un Biodiesel.

## Revendications

1. Procédé de fabrication d'esters éthyliques d'acides gras à partir d'huiles ou de graisses végétales ou animales ou d'autres mélanges de glycérides qui comprend la succession d'étapes suivantes :
- une étape (a) dans laquelle on transestérifie l'huile, la graisse, ou le mélange de glycérides dont l'indice d'acide est au plus de 2 par de méthanol dont la teneur en eau est comprise entre 3000 et 5000 ppm, dans un rapport stoechiométrique éthanol/huile compris entre 1,3 et 2 en utilisant un catalyseur soluble, ou le devenant au cours de la réaction ;
- une étape (b) de décantation et d'élimination de la glycérine formée sans avoir recours à une opération d'évaporation de l'excès d'éthanol ;
- une étape (c) dans laquelle on réalise une deuxième réaction de transestérification de façon à obtenir un produit dont la teneur en esters est d'au moins 97 % en masse ;
- une étape (d) dans laquelle on réalise une neutralisation contrôlée du catalyseur en introduisant une quantité d'acide telle que l'on neutralise uniquement le catalyseur actif;
- une étape (e) dans laquelle on élimine par distillation l'excès d'éthanol
- une étape (f) dans laquelle l'ester subit une purification par des séquences de lavage à l'eau ; et
- une étape (g) dans laquelle le mélange d'ester est séché sous pression réduite.

2. Procédé selon la revendication 1 **caractérisé en ce que** ledit rapport stoechiométrique éthanollhuüe est compris entre 1,6 et 1,8.

3. Procédé selon l'une des revendications 1 à 2 **caractérisé en ce que**, dans l'étape (a) et dans l'étape (c), le catalyseur utilisé est obtenu par dissolution d'une base forte dans de l'alcool, ou encore à partir d'un alcoolate de métal alcalin, ou à partir d'un composé métallique de type alcoolate, alkyle et/ou oxyde.

4. Procédé selon l'une des revendications 1 à 3 **caractérisé en ce que** le catalyseur utilisé est un alcoolate de sodium, et que l'étape (d) est une étape de neutralisation contrôlée des alcoolates

5. Procédé selon la revendication 4 **caractérisé en ce que** l'on utilise comme catalyseur du méthylate de sodium en solution dans du méthanol.

6. Procédé selon l'une des revendications 1 à 5 **caractérisé en ce que**, dans l'étape (a) et dans l'étape (c), la température de réaction est comprise entre 20 et 100°C.

7. Procédé selon l'une des revendications 1 à 6 **caractérisé en ce que**, dans l'étape (a), le temps de réaction en mode batch qui permet d'atteindre l'équilibre thermodynamique est compris entre 40 et 160 minutes.

8. Procédé selon la l'une des revendications 1 à 7 **caractérisé en ce que**, dans l'étape (b), la décantation naturelle de la glycérine est obtenue à une température du milieu comprise entre 40 et 60°C.

9. Procédé selon l'une des revendications 1 à 8 **caractérisé en ce que**, dans l'étape (c), la quantité d'éthanol utilisée correspond à un rapport stoechiométrique éthanol/huile de départ compris entre 0,3 et 1.

10. Procédé selon la revendication 9 **caractérisé en ce que** ledit rapport stoechiométrique éthanol/huile de départ est compris entre 0,5 et 0,7.

11. Procédé selon l'une des revendications 9 et 10 **caractérisé en ce que**, dans l'étape (c), le temps de catalyse est compris entre 20 et 45 minutes.

12. Procédé selon l'une des revendications 1 à 11 **caractérisé en ce que**, dans l'étape (e), on élimine l'excès d'éthanol par distillation.

13. Procédé selon l'une des revendications 1 à 12 **caractérisé en ce que**, dans l'étape (f), on effectue un premier lavage neutralisant au moyen d'un acide minéral fort, puis un ou plusieurs lavage(s) à l'eau pure.

## Patentansprüche

1. Verfahren zur Herstellung von Fettsäureethylestern aus pflanzlichen oder tierischen Ölen oder Fetten oder sonstigen Glyceridmischungen, welches die Abfolge der folgenden Schritte umfasst:
- einen Schritt (a), in welchem das Öl, das Fett oder die Glyceridmischung, dessen/deren Säurezahl höchstens 2 beträgt, mittels Ethanol, dessen Wassergehalt im Bereich von 3000 bis 5000 ppm liegt, bei einem stöchiometrischen Ethanol/Öl-Verhältnis im Bereich von 1,3 bis 2 umgeestert wird, wobei ein Katalysator verwendet wird, der löslich ist oder es im Laufe der Reaktion wird;
- einen Schritt (b), in welchem das Glycerin, das sich gebildet hat, sich absetzt und entfernt wird, ohne dass der überschüssige Ethanol verdampft wird;
- einen Schritt (c), in welchem eine zweite Umesterungsreaktion derart durchgeführt wird, dass ein Produkt erhalten wird, dessen Gehalt an Estern mindestens 97 Massen-% beträgt;
- einen Schritt (d), in welchem eine kontrollierte Neutralisierung des Katalysators erfolgt, indem eine Menge an Säure zugesetzt wird, die derart beschaffen ist, dass nur der aktive Katalysator neutralisiert wird;
- einen Schritt (e), in welchem der überschüssige Ethanol durch Destillation entfernt wird;
- einen Schritt (f), in welchem der Ester eine Aufreinigung erfährt, indem er mehrmals nacheinander mit Wasser gewaschen wird; und
- einen Schritt (g), in welchem die Estermischung unter vermindertem Druck getrocknet wird.

2. Verfahren nach Anspruch 1, **dadurch gekennzeichnet, dass** das stöchiometrische Ethanol/Öl-Verhältnis im Bereich von 1,6 bis 1,8 liegt.

3. Verfahren nach einem der Ansprüche 1 bis 2, **dadurch gekennzeichnet, dass** der in Schritt (a) und in Schritt (c) verwendete Katalysator erhalten wird, indem eine starke Base in Alkohol aufgelöst wird, oder auch ausgehend von einem Alkalimetallalkoholat, oder ausgehend von einer Metallverbindung des Typs Alkoholat, Alkyl und/oder Oxid.

4. Verfahren nach einem der Ansprüche 1 bis 3, **dadurch gekennzeichnet, dass** es sich bei dem verwendeten Katalysator um ein Natriumalkoholat handelt, und dass der Schritt (d) ein Schritt der kontrollierten Neutralisierung der Alkoholate ist.

5. Verfahren nach Anspruch 4, **dadurch gekennzeichnet, dass** als Katalysator Natriummethylat verwendet wird, welches in Methanol gelöst ist.

6. Verfahren nach einem der Ansprüche 1 bis 5, **dadurch gekennzeichnet, dass** in Schritt a) und in Schritt (c) die Reaktionstemperatur im Bereich von 20 bis 100 °C liegt.

7. Verfahren nach einem der Ansprüche 1 bis 6, **dadurch gekennzeichnet, dass** in Schritt (a) die Reaktionszeit im chargenweise Betrieb, welche es ermöglicht, das thermodynamische Gleichgewicht zu erreichen, im Bereich von 40 bis 160 Minuten liegt.

8. Verfahren nach einem der Ansprüche 1 bis 7, **dadurch gekennzeichnet, dass** in Schritt (b) der natürliche Absetzvorgang des Glycerins bei einer Temperatur des Mediums erzielt wird, die im Bereich von 40 bis 60 °C liegt.

9. Verfahren nach einem der Ansprüche 1 bis 8, **dadurch gekennzeichnet, dass** in Schritt (c) die Menge des verwendeten Ethanols einem stöchiometrische Ethanol/Öl-Verhältnis im Bereich von 0,3 bis 1 entspricht.

10. Verfahren nach Anspruch 9, **dadurch gekennzeichnet, dass** das stöchiometrische Ethanol/Öl-Verhältnis im Bereich von 0,5 bis 0,7 liegt.

11. Verfahren nach einem der Ansprüche 9 und 10, **dadurch gekennzeichnet, dass** in Schritt (c) die Katalysezeit im Bereich von 20 bis 45 Minuten liegt.

12. Verfahren nach einem der Ansprüche 1 bis 11, **dadurch gekennzeichnet, dass** in Schritt (e) der überschüssige Ethanol durch Destillation entfernt wird.

13. Verfahren nach einem der Ansprüche 1 bis 12, **dadurch gekennzeichnet, dass** in Schritt (f) eine erste Waschung durchgeführt wird, indem eine Neutralisierung mittels einer starken Mineralsäure erfolgt, und anschließend eine oder mehrere Waschung(en) mit reinem Wasser.

## Claims

1. A method for manufacturing fatty acid ethyl esters from vegetable or animal oils or fat or from other glyceride mixtures, comprising the succession of stages as follows:
- a stage (a) wherein the oil, the fat or the glyceride mixture whose acid number is at most 2 is transesterified by ethanol whose water content ranges between 3000 and 5000 ppm, with an ethanol/oil stoichiometric ratio ranging between 1.3 and 2 using a soluble catalyst or a catalyst that becomes soluble during the reaction,
- a stage (b) wherein the glycerin formed is decanted and removed without requiring an excess ethanol evaporation operation,
- a stage (c) wherein a second transesterification reaction is carried out so as to obtain a product whose ester content is at least 97 % by mass,
- a stage (d) wherein controlled neutralization of the catalyst is carried out by introducing a proportion of acid such that only the active catalyst is neutralized,
- a stage (e) wherein the excess ethanol is removed by distillation,
- a stage (f) wherein the ester undergoes purification by means of water wash sequences, and
- a stage (g) wherein the ester mixture is dried under reduced pressure.

2. A method as claimed in claim 1, **characterized in that** said ethanol/oil stoichiometric ratio ranges between 1.6 and 1.8.

3. A method as claimed in claim 1 or 2, **characterized in that**, in stages (a) and (c), the catalyst used is obtained by dissolution of a strong base in alcohol, or from an alkaline metal alcoholate, or from a metallic compound of alcoholate, alkyl and/or oxide type.

4. A method as claimed in one of claim 1 to 3, **characterized in that** the catalyst used is a sodium alcoholate, and **in that** stage (d) is a controlled neutralization of alcoholates.

5. A method as claimed in claim 4, **characterized in that** sodium methylate in solution in methanol is used as the catalyst.

6. A method as claimed in one of claim 1 to 5, **characterized in that**, in stages (a) and (c), the reaction temperature ranges between 20°C and 100°C.

7. A method as claimed in one of claim 1 to 6, **characterized in that**, in stage (a), the reaction time in batch mode allowing to reach thermodynamic equilibrium ranges between 40 and 160 minutes.

8. A method as claimed in one of claim 1 to 7, **characterized in that**, in stage (b), natural decantation of the glycerin is obtained at a medium temperature ranging between 40°C and 60°C.

9. A method as claimed in one of claim 1 to 8, **characterized in that**, in stage (c), the amount of ethanol used corresponds to an initial ethanol/oil stoichiometric ratio ranging between 0.3 and 1.

10. A method as claimed in claim 9, **characterized in that** said initial ethanol/oil stoichiometric ratio ranges between 0.5 and 0.7.

11. A method as claimed in any one of claims 9 and 10, **characterized in that**, in stage (c), the catalysis time ranges between 20 and 45 minutes.

12. A method as claimed in one of claim 1 to 11, **characterized in that**, in stage (e), the excess ethanol is removed by distillation.

13. A method as claimed in one of claim 1 to 12, **characterized in that**, in stage (f), a first neutralizing wash is carried out using a strong mineral acid, followed by one or more wash cycles with pure water.
